Europäisches Patentamt

European Patent Office

Office européen des brevets

(19)

(11) Publication number: **0 107 453**
**A1**

(12) **EUROPEAN PATENT APPLICATION**

(21) Application number: **83306224.3**

(22) Date of filing: **14.10.83**

(51) Int. Cl.³: **G 06 F 9/46**

(30) Priority: **15.10.82 GB 8229583**

(43) Date of publication of application: **02.05.84**
**Bulletin 84/18**

(84) Designated Contracting States: **DE FR NL SE**

(71) Applicant: **The General Electric Company, p.l.c., 1 Stanhope Gate, London W1A 1EH (GB)**

(72) Inventor: **Geiger, Geoffrey Victor, 27 Victor Grove, Wembley Middlesex (GB)**
Inventor: **Cullen, Alan, 37 Greystoke Avenue, Pinner Middlesex (GB)**

(74) Representative: **Dolwin, John Davison, Central Patent Department The General Electric Company plc Hirst Research Centre East Lane, Wembley Middlesex HA9 7PP (GB)**

(54) **Data processing systems.**

(57) In a multiprocessor system, the operating system is structured such that there is a local operating system per processor (36-39, 42-44, 61-66), a group operating system (21) per group of processor (31-33) and a global operating system (22) per system. Each operating system is independent and refers to a higher level operating system only if its local processing ability is exceeded. Each group operating system (21) is allocated as a task to at least one of the processors in its group (31-33) and the global operating system (22) is allocated as a task to one of the groups within the system (21). The higher order operating systems have the ability to reschedule resources by reallocating the function of particular processor units. A system having more than three levels of operating system may be provided.

-2-

The present invention relates to data processing systems and in particular to such systems having a plurality of independently operating data processing units.

It is usual when providing a data processing system having more than one data processing units for messages to be transferred between the units by use of a common store. Thus, one data processing unit will write into the store and another data processing unit will read from that store. If a response is necessary the process is reversed.

Also unless the data processing units are arranged to deal only with information to and from respective hardware independantly associated with particular data processing units it is common to appoint one of the units as the 'master' unit effectively having a 'central' control regardless of the physical distribution of the processing units.

Subsequently expanding systems having a common memory leads to delays in the transfer of data between the processing units whilst systems having a 'central' control are liable to catastrophic failure if a fault occurs in the central control.

It is an object of the present invention to provide a data processing system in which the control of the system is distributed through the data processing units thereof.

According to the present invention in a data processing system having a plurality of data processing units each capable in use of running any one of a plurality of programs each of which is arranged to handle a specific task, a master operating system is arranged to allocate each system task as it arises to one of the data processing units each of which may have at any time a plurality of tasks waiting to be handled, and each of said data processing units has a respective local operating system arranged to determine from time-to-time which of the programs shall be run to handle one of the respective tasks allocated as aforesaid, said master operating system being provided by at least one of said data processing units when appropriately programmed.

Preferably each of said data processing units comprises a system processor programmed to provide the local operating system as aforesaid and a main processor responsive to the system processor to run the selected task programs.

Each of said data processing units may also have a link processor which is also responsive to the respective system processor to provide an interface with other data processing units of the data processing system. Said system processor may also be arranged to communicate directly with controlled apparatus and may be arranged to detect from data received from controlled apparatus locally originated tasks and to allocate such tasks to its respective data processing unit without intervention of said master operating system.

A plurality of data processing systems in accordance with the invention may be combined to give a data processing system programmed to provide three or more levels of autonomous operating systems each operating system being arranged to allocate tasks arising at its respective level either to itself or to the next lower level.

A data processing system in accordance with the invention will now be described by way of example only with reference to the accompanying drawings of which:-

Figure 1 is a block diagram of the system;

Figure 2 is a block diagram of one of the data processing units of the system, and

Figure 3 is a modified block diagram of the system used to explain how the distributed master operating system functions.

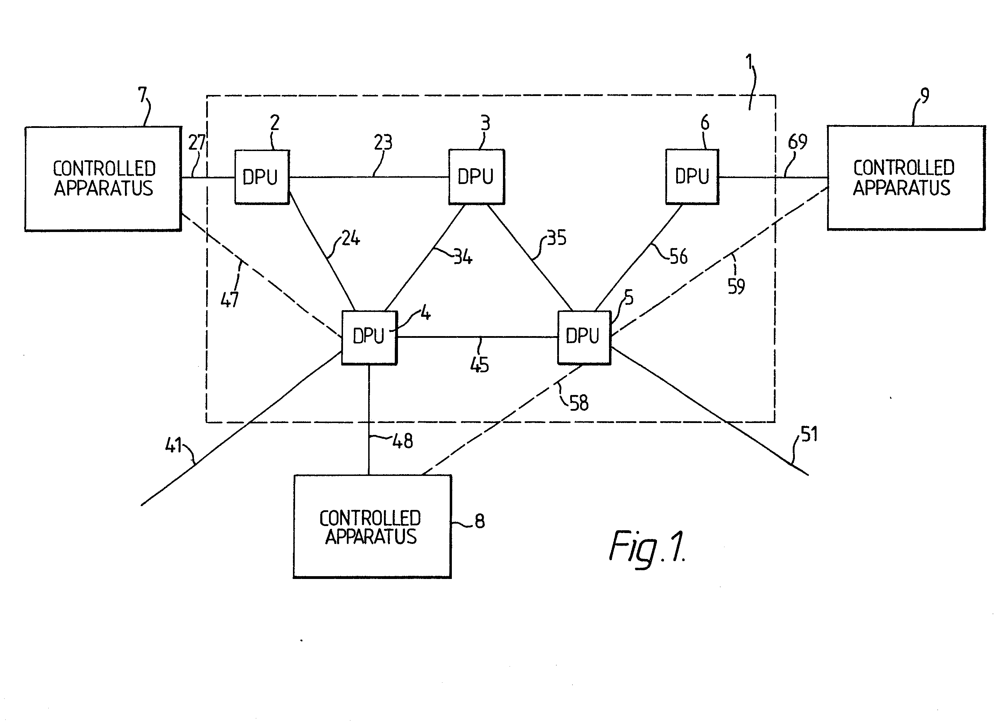

Referring to Figure 1, the data processing system 1 has five data processing units, 2 to 6 some of which 2, 4 and 6 provide a principal control function for

-4-

apparatuses 7, 8 and 9 which may be, for example, units of a telephone exchange, separate parts of a production process, control apparatus of a motor vehicle and the like.

Each of the data processing units 2 - 6 has a respective communication link 23, 24, 34, 35, 45 and 56 to at least one of the other data processing units, whilst the data processing units 4 and 5 have respective communication links 41 and 51 which may be connected to other data processing systems (not shown). The communication links 23, 24, 34, 35, 41, 45 and 51, 56 may be for example optical fibre links.

It is here noted that a number of data processing systems 1 may be interconnected to provide a more powerful data processing system. In such a case each of the individual data processing systems will be operated in the manner hereinafter described in respect of the data processing units 2 - 6. Similarly the more powerful data processing system may be interconnected with a similar system in which case each of the larger systems will be operated in a similar manner. To avoid confusion in description of more powerful systems, the data processing system 1 consisting of the data processing units 2 - 6 will be referred to as a "level one data processing system", a more powerful system having two or more level one data processing systems will be referred to as a "level two data processing system" and so on.

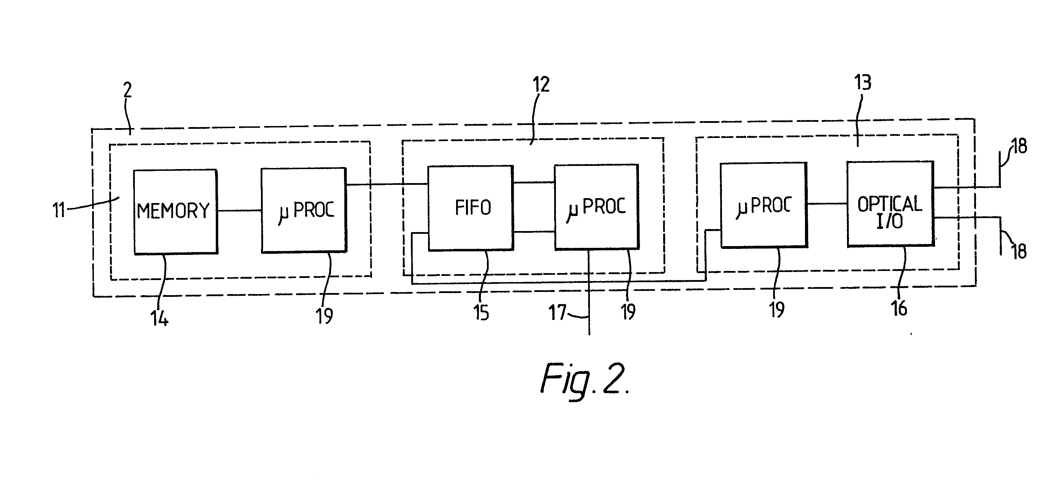

Referring also to Figure 2 each of the data processing units 2 - 6 of the level one data processing system 1 comprises a main processor unit 11, a system processor unit 12 and a link processor unit 13. In practice the three processor units 11, 12 and 13 consist of a microprocessor and memory combination and respectively an additional memory 14 of a larger capacity, a first in-first out (FIFO) store 15 and optical fibre interface 16. Data processing units which communicate directly with the controlled apparatus have a data bus connection 17 from the system processor unit 12, and all of the data processing units 2 - 6 have optical fibre links 18 from the link processor unit 13 to the link processor unit of the other data processing units with which they communicate directly. For the avoidance of doubt it is here noted that the data processing units 2 to 6 need not be fully interconnected, neither is there a data bus to which all of the data processing units have access.

It is necessary to consider initially only the mode of operation of one of the data processing units, say 2, and to state that the other data processing units 3 to 6 operate in a similar manner.

The microprocessor 19 of the system processor unit 12 is programmed to provide an operating system local to that unit. Tasks to be handled by the data processing unit 2 may be received by the system processor unit either directly from data received over the communication link 17 from the apparatus 7, as a result of processing of a previous task by the main processor unit 11 or by way of the link processor unit 13 from another data processing unit. Under certain circumstances the system processor unit 12 may also generate tasks internally.

The operating system in the system processor unit 12 schedules each task in accordance with its priority and causes the main processor unit 11 to run an appropriate program to handle each of the tasks one at a time. Communication between the microprocessor 19 of the system processor unit 12 and the microprocessor 19 of the main processor unit 11 is by way of the FIFO store 15.

Having received a task from the system processor unit 12, the microprocessor 19 of the main processor unit 11 will run the selected program which may be held in the memory 14 with reference to data which may also be held in the memory 14.

-6-

Alternatively the program for the main processor unit 11 may be held in read-only-memory (ROM) (not shown) or may be loaded from a backing store (not shown) which may be a disc store for example. Each of the backing stores is connected to the system processor unit 12 of a respective one of the data processing units 2 - 6 (of Figure 1). If the required program is not held in a backing store directly associated with the respective data processing unit, the program may be requested from another one of the data processing units 2 - 6. Backing stores directly associated with the respective data processing unit (say) 2 may be used for the storage of pages of data to conserve space in the memory 14 of the main processor unit 10.

On completion of handling of a task (if possible) the main processor unit 11 updates the data (if necessary) in the memory 14 and returns data by way of the FIFO store 15 to the system processor unit 12. The system processor unit 12 will respond by allocating a further task to the main processor unit 11 and will act in dependence upon the data returned either by forwarding the data to the apparatus 7 by way of the connection 17 or by sending a message by way of the FIFO store 15 and the link processor 13 to another data processing unit.

The link processor 13 is arranged to send or receive data over one of the communication links 18. Data received over one of the links 18 includes routing information which determines its destination. If the link processor unit 13 receives data intended for itself it is arranged to send that data unaltered by way of the FIFO store 15 to the system processor unit 12. Alternatively the link processor unit 13 determines from the routing information which of the other data processing units 3 - 6 the data is intended for and retransmits the data unaltered to that data processing unit. If the link processor 13 does not have a direct communication link 18 to the particular data processing unit to which the message is addressed it is arranged to cause that message to be sent towards another data processing unit which forwards the data. Thus any particular message from one data processing unit to another of the data processing unit may make several hops before arriving at its ultimate destination.

Consider for example some action in the controlled apparatus 7 which requires another action in the controlled apparatus 9. Data defining the action in the controlled apparatus 7 will be received over the communication link 27 by the data processing unit 2. Within the data processing unit 2, the data is determined by the system processor unit 12 as a task which is forwarded to the main processor unit 11. Completion of handling of the task causes data to be returned to the system processor unit 12 which forwards a message to the respective link processor unit 13.

It will be noted that there is no direct communication link between the data processing unit 2 and the data processing unit 6. Accordingly the respective link processor unit 13 of the data processing unit 2 will forward the message to the respective link processor 13 of either of the data processing units 3 and 4 which in turn forwards the message by way of the data processing unit 5 to the data processing unit 6.

The message is then passed to the system processor unit 12 of the data processing unit 6 which schedules a task to the respective main processor unit 11, receives an answer and transfers appropriate data to the controlled apparatus 9.

It is noted that the controlled apparatus 9 is responsive to the data processing unit 6 as shown but also has a secondary communication link 59 to the data processing unit 5. Determination of which of the data processing units 5 and 6 shall provide a control function for the controlled apparatus 9 is a function of a higher order operating system and is described hereinafter.

Whilst as thus far described each data processing unit has three separate microprocessors 19 each providing a specific function it will be realised that the functions of the main processor unit 11, the system processor unit 12 and the link processor unit 13 could time-share a single processor.

Having considered the operating system of the individual data processing units 2 - 6 it is now necessary to consider the higher order operating system.

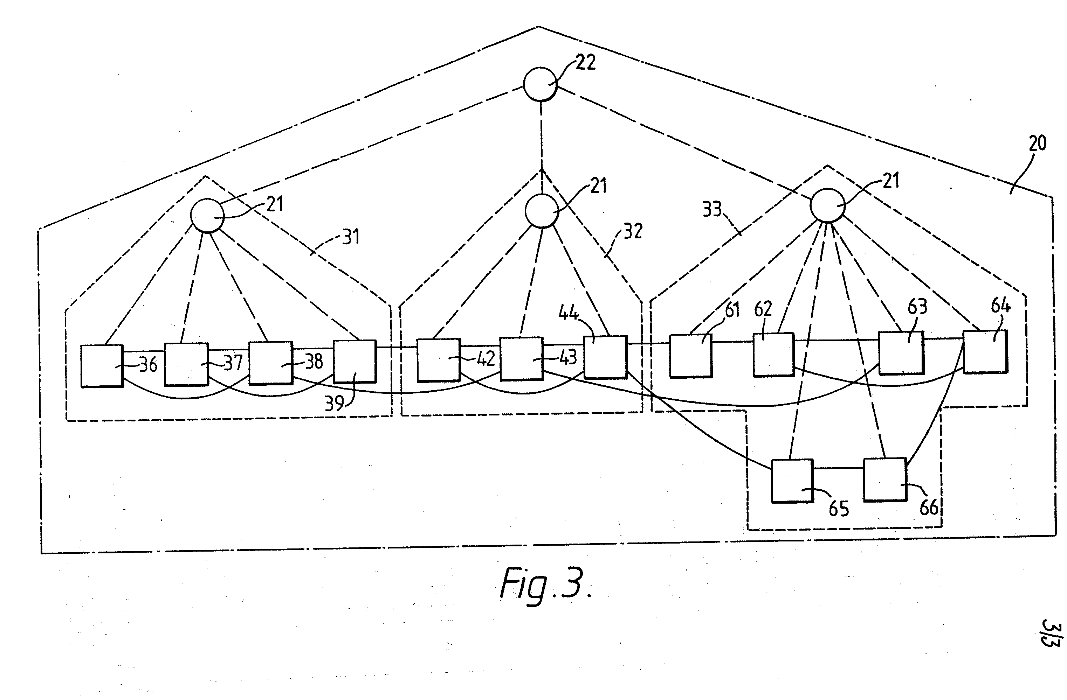

Accordingly, reference is now made to Figure 3 which shows a level two (as hereinbefore defined) data processing system 20 having three level one data processing systems 31 - 33. To avoid diagram confusion controlled apparatus is now shown but it is noted that each of the individual data processing units may have an apparatus control function.

Each of the level one date processing systems 31 - 33 has a number of independantly operating data processing units 36 - 39, 42 - 44 and 61 - 66 each of which is of the kind described with reference to Figure 2. Within each of the level one data processing systems 31 - 33 one of the data processing units runs a level one operating system 21 which provides the respective operating system for the whole of the level one data processing system (as indicated by chain dash lines) and is arranged to provide a fault monitoring service to the respective data processing units of its system together with allocation of the level one resources and system tasks. The level one operating system runs in one of the main processor units (11 of Figure 2) of one of the data processing units under control of the local operating system held in the respective system processor unit (12 of Figure 2).

The level one operating system 21 of each of the level one data processing systems, consider say 31, stores data defining the applications programs held by each of the data processing units 36 - 39 and data defining each of the communication links between the data processing units 36 - 39 and between the level one processing system 31 and the level one processing system 32.

Accordingly if, say, the data processing unit 36 (in which the operating system 21 is not running) processes data to a point at which further handling of the data by its respective main processor (11 of Figure 2) is not possible due to the absence of the particular application program in its ambit, a message is sent by the local operating system to the level one operating system 21 requesting a destination for further processing. If the level one operating system 21 determines that the particular application program required is in, say, the data processing unit 39 the level one operating system 21 returns data so specifying.

The data processing unit 36 may now transfer the request in message form to the data processing unit 39 either by way of the data processing unit 37 or by way of the data processing unit 38 so that the data processing unit 39 may carry out the further data processing.

Another function of the level one operating system 21 is that of fault monitoring. Assume that the data processing unit 37 sends a message to the data processing unit 39 and receives no response, then the data processing unit 37 may consult the operating system 21 by forwarding a message indicating that no response has been received.

The operating system 21 will then implement testing of the data processing unit 39 (by for example sending a message) to determine whether the fault is due to a failure of the data processing unit 39 or due to a failure of the communication link between the data processing units 37 and 39.   If the non-response is due to a failure of the communication link then the operating system 21 will send a message to the data processing unit 37 indicating an alternative route (for example via the data processing unit 38) which messages for the data processing unit 39 may take.   Thus the system 31 is tolerant of failure of individual communication links.

However, if the non-response is due to a fault in the data processing unit 39 then the operating system re-allocates the applications programs which would normally be present in that data processing unit.

Consider for example the system of Figure 1 in which a fault develops in, say, the data processing unit 2.   The operating system is aware that the data processing unit 2 controls the apparatus 7 and that the apparatus 7 can also be controlled over the communication link 47 by the data processing unit 4.   The operating system may now re-allocate the handling of tasks related to the apparatus 7 to the data processing unit 4.   If as a result of the first re-allocation the data processing unit 4 is unable to handle the amount of data originating from both of the apparatuses 7 and 8, the handling of tasks for the apparatus 8 may be re-allocated to the data processing unit 5 whilst some of the applications programs being handled by the data processing unit 5 may be re-allocated to the data processing unit 4.   Thus the system is tolerant of failures of data processing units provided that the overall capacity of the system is not exceeded.

Referring again to Figure 3 the level two data processing system 20 has a level two operating system 22 which performs in a similar manner to the respective level one operating systems 21 of the level one data processing systems 31 - 33.   Thus if the level one data processing system requires an application program not available within its ambit the respective level one operating system 21 will apply to the level two operating system 22 for the appropriate resource.

Similarly if one of the level one data processing systems 21 becomes overloaded the level two operating system 22 may re-allocate some of the programs and tasks of that system to another level one data processing system. It will also be appreciated that if, say the level one data processing system 31 fails because say, the data processing unit 38 which may have been running the operating system 21 has failed, the level two operating system 22 may cause the respective level one operating system 21 to be re-established in another of the data processing units 36 - 39.

It will be realised that whilst as described there are three distinct levels of operating system many more levels may be implemented in a similar manner. It will also be realised that a task arising at the lowest level of the data processing units may progressively involve the entire processing system. The highest level operating system (in the example of Figure 3, the level two operating system 22) is duplicated and each of the two level two operating systems is arranged to recover the other level two operating system in the event of a failure thereof.

It will be appreciated that the individual data processing systems or, indeed, individual data processing units of a level one data processing system need not be co-located but the entire data processing system will still act as a complete entity if the need arises.

-12-

Claims

1. A data processing system having a plurality of data processing units each capable in use of running any one of a plurality of programs each of which is arranged to handle a specific task characterised in that a master operating system is arranged to allocate each system task as it arises to one of the data processing units (2-6) each of which may have at any time a plurality of tasks waiting to be handled,and er.h of said data processing units (2-6) has a respective l al operating system arranged to determine from time-to-time which of the programs shall be run to handle one of the respective tasks allocated as aforesaid, said master operating system being provided by one of said data processing units (2-6) when appropriately programmed.

2. A data processing system according to Claim 1 further characterised in that each of said data processing units (2-6) comprises a system processor (12) programmed to provide the local operating system as aforesaid and a main processor (11) responsive to the system processor (12) to run the selected task programs.

3. A data processing system according to Claim 2 further characterised in that each of said data processing units (2-6) has a link processor (13) which is also responsive to the respective system processor (12) to provide an interface with other data processing units (2-6) of the data processing system (1).

4. A data processing system according to Claim 2 or Claim 3 further characterised in that each of the system processors (12) is arranged to communicate directly with controlled apparatus (7-9).

5. A data processing system as claimed in Claim 2, Claim 3 or Claim 4 further characterised in that each

-13-

of the system processors (12) is also arranged to detect from data received from controlled apparatus (7-9) locally originated tasks and to allocate such tasks to its respective data processing unit (2-6) without intervention of said master operating system.

6.    A data processing system (20) comprising a plurality of primary data processing systems (31-33) each of which is in accordance with any one of Claims 1 to 5 characterised in that each processor unit (36-39, 42-44, 61-66) includes a local operating system, each primary data processing system (31-33) includes a first high level operating system (21) provided by an appropriately programmed one of its respective processor units (36-39, 42-44, 61-66) and one of the data processing systems (31-33) is programmed to provide a second higher level operating system (22).

7.    A data processing system according to Claim 6 further characterised in that each operating system is arranged to allocate tasks arriving at a corresponding level within the system either to itself or to the next lower level operating system.

Fig.1.

Fig.2.

Fig.3.

0107453

3/3

0107453

**European Patent Office**

**EUROPEAN SEARCH REPORT**

Application number

EP 83 30 6224

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 333 144 (WHITESIDE, BENDIX) * Column 5, lines 31-47; column 6, lines 9-37; column 7, line 47 - column 8, line 14; column 10, line 45 - column 11, line 22 * | 1-5 | G 06 F 9/46 |
| | --- | | |
| A | AFIPS CONFERENCE PROCEEDINGS 1981 NATIONAL COMPUTER CONFERENCE, pages 283-289, Arlington, US VAN TILBORG et al.: "Distributed task force scheduling in multi-microcomputer networks" * Whole document * | 1-7 | |
| | --- | | |
| A | SOFTWARE & MICRO SYSTEMS, vol. 1, no. 5, August 1982, pages 128-134, Camberley, Surrey, GB G.C. SHOJA et al.: "A control kernel to support ADA intertask communication on a distributed multiprocessor computer system" * Whole document * | 1-7 | |
| | --- | | |
| A | IEEE INTERNATIONAL CONVENTION RECORD, March 1965, pages 266-275, New York, US J.J. PARISER: "Multiprocessing with floating executive control" * Page 267, left-hand column, line 26 - page 269, right-hand column, line 3 * | 1-5 | |
| | ------ | | |

**TECHNICAL FIELDS SEARCHED (Int. Cl. ³)**

G 06 F 9/46

The present search report has been drawn up for all claims

| Place of search | Date of completion of the search | Examiner |
|---|---|---|
| THE HAGUE | 11-01-1984 | LEPEE W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82